# EUROPÄISCHE PATENTSCHRIFT

(11) **EP 2 032 864 B1**
(45) Veröffentlichungstag und Bekanntmachung des Hinweises auf die Patenterteilung: **02.05.2018**
(21) Anmeldenummer: 07786771.1
(22) Anmeldetag: 20.06.2007
(51) Int. Cl.: F16B 43/00, F16B 5/02

(54) **SCHEIBE UND DAMIT VERSEHENE SCHRAUBENVERBINDUNG**
WASHER AND THREADED ASSEMBLY PROVIDED THEREWITH
RONDELLE ET ASSEMBLAGE À VIS POURVU DE LADITE RONDELLE

(30) Priorität: 26.06.2006 DE 102006029253
(43) Veröffentlichungstag der Anmeldung: 11.03.2009
(73) Patentinhaber: SFS intec Holding AG, 9435 Heerbrugg (CH)
(72) Erfinder: PALM, Erich, CH-9434 Au (CH)
(86) Internationale Anmeldenummer: PCT/EP2007/056119
(87) Internationale Veröffentlichungsnummer: WO 2008/000668

(56) Entgegenhaltungen:
- GB-A- 1 493 220
- US-A- 3 992 974
- US-A- 4 749 322

## Beschreibung

Die Erfindung betrifft eine Schraubenverbindung zwischen einer Schraube und einem Werkstück, wobei die Schraube einen Schaft aufweiset, der mit einem Gewinde versehen ist und an seinem dem Kopf benachbarten Ende einen gewindefreien Schaftabschnitt hat, wobei zwischen dem Kopf der Schraube und dem Werkstück eine Scheibe angeordnet ist, wobei die Scheibe eine die Schraube aufnehmende Bohrung aufweist und um wenigstens eine sich diametral durch die Bohrung erstreckende Achse räumlich so verformt ist, dass die Scheibe um die diametrale Achse abgewinkelt ist, so dass eine Winkelscheitellinie parallel zu der Achse ist und die abgewinkelte Scheibe eine Einsatzdicke hat, die größer ist als die Ausgangsdicke der Scheibe, und wobei die Scheibe aus einem Material besteht, das so gewählt ist, dass die Scheibe bei dem Herstellen der Schraubenverbindung plastisch verformbar ist.

Eine Schraubenverbindung nach dem Oberbegriff des Anspruchs 1 ist aus dem Dokument GB-A-1 493 220 bekannt. Diese bekannte Schraubenverbindung wird mit einer Scheibe hergestellt, die bei dem Anziehen der Schraube plastisch verformt wird. Die plastische Verformung der Scheibe wird dazu ausgenutzt, einen an jedem Ende der Scheibe angebrachten Schenkel in eine Schulter des Kopfes der Schraube abzulenken. Auf diese Weise wird die Scheibe durch die Schenkel an dem Kopf befestigt und kann beim Lösen nicht vom Kopf wegfallen. Die Gefahr, dass eine wegfallende Scheibe zu einem Kurzschluss in einem Elektroverteiler führen kann, wird dadurch reduziert. Das Werkstück ist bei dieser bekannten Schraubenverbindung ein Klemmenblock, der aus Sicherheitsgründen sehr stabil und dick sein muss, damit in ihm keine Verformung möglich ist. Zwischen dem Schraubenkopf und der Scheibe ist ein Federring angeordnet. Dieser dürfte aber hauptsächlich als Rückdrehsicherung für die Schraube dienen.

Eine bekannte Scheibe, die bei einer Schraubenverbindung der eingangs genannten Art einsetzbar wäre, ist beispielsweise eine Wellscheibe. Sie wird in einer Schraubenverbindung eingesetzt, um die Schraube gegen Lockern und Rückdrehen zu sichern. Eine solche Wellscheibe besteht aus Federstahl und wird bei dem Herstellen der Schraubenverbindung, d. h. bei dem Anziehen der Schraube elastisch verformt. Durch die elastische Verformung der Wellscheibe bleibt die fertige Schraubenverbindung durch eine in Richtung der Schraubenachse wirksame Federkraft vorgespannt. Wenn in einer Schraubenverbindung ein eventuell vorhandenes Spiel ausgeglichen werden soll, werden üblicherweise Beilagscheiben eingesetzt, die eine dem auszugleichenden Spiel entsprechende definierte Dicke haben. Wellscheiben od.dgl. haben nur eine geringe Dicke und sind daher nur sehr begrenzt dafür geeignet, zusätzlich zu ihrer Rückdrehsicherungsfunktion,auch noch zu einem Ausgleich von Spiel eingesetzt zu werden.

Eine Schraubenverbindung, bei der keine plastisch verformbare Scheibe eingesetzt wird, ist aus dem Dokument DE 197 18 712 C1 bekannt. Eine ähnliche Schraubenverbindung ist aus dem Dokument US 2,321,379 bekannt, wobei in diesem Fall die Schraube aber keine lochformende oder -bohrende Spitze, sondern lediglich ein sich etwas verjüngendes Schaftende aufweist. In beiden Fällen besteht das Werkstück aus zwei dünnen Platten, die mit Hilfe der Schraube sicher gegeneinander geklemmt werden sollen. Dadurch, dass zwischen dem Kopf und dem auf dem Schaft vorgesehenen Gewinde ein gewindefreier Schaftabschnitt ausgebildet ist, der gleich groß ist wie oder geringfügig kleiner sein kann als die Dicke der beiden miteinander zu verbindenden dünnen Platten, kann die Schraube nach dem endgültigen Setzen überdreht werden. Eine feste Verbindung zwischen den beiden das Werkstück bildenden dünnen Platten, ohne dass sich die Schraube noch zurückdrehend lösen kann, ist aber nur gewährleistet, wenn zwischen dem Schraubenkopf und dem Werkstück kein Spiel vorhanden ist. Zu diesem Zweck muss die Werkstückdicke genau der Länge des gewindefreien Schaftabschnittes entsprechen oder darf nur geringfügig größer sein als die Länge des gewindefreien Schaft-abschnittes. Grundsätzlich sollen die beiden dünnen Platten in der befestigten Stellung fest aneinander gedrückt gehalten werden. Wenn eine der beiden dünnen Platten zu dünn ist oder nur eine Schraube verfügbar ist, deren gewindefreier Schaftabschnitt für die vorhandene Werkstückdicke zu lang ist, ist Spiel vorhanden, für das es bei einer solchen Schraubenverbindung keine Ausgleichsmöglichkeit gibt. Eine Sicherungsscheibe wie eine Wellscheibe wäre wegen ihrer geringen Dicke dafür nur begrenzt geeignet.

Das Dokument EP 0 556 438 A1 beschreibt eine Schraube mit einer elastisch verformbaren Scheibe zum Herstellen einer Schraubenverbindung. Die elastische Rückstellkraft der Scheibe wird zum Herstellen einer festen Verbindung ausgenutzt. Auch mit einer solchen Scheibe ist ein Spielausgleich nur begrenzt möglich.

Aufgabe der Erfindung ist es, eine Schraubenverbindung der eingangs genannten Art so auszubilden, dass mit ihr Spiel in einem größeren Bereich ausgeglichen werden kann bzw. dass bei ihr eine Sicherung gegen zurückdrehendes Lösen der Schraube gewährleistet wird.

Diese Aufgabe ist ausgehend von einer Schraubenverbindung der eingangs genannten Art durch die Erfindung dadurch gelöst, dass das Werkstück aus wenigstens einer und vorzugsweise aus mehreren dünnen Platten besteht, dass der Schaft an seinem freien, von dem Kopf abgewandten Ende eine lochformende oder -bohrende Spitze hat und dass die Länge des gewindefreien Schaftabschnittes kleiner ist als die Summe der Dicke des Werkstückes und der Einsatzdicke der Scheibe und im Wesentlichen nicht kleiner ist als die Summe der Dicke des Werkstückes und der Ausgangsdicke der Scheibe.

Bei der erfindungsgemäßen Schraubenverbindung, bei der die Schraube einen gewindefreien Schaftabschnitt aufweist, kann die Werkstückdicke in einem weiten Bereich kleiner als die Länge des gewindefreien Schaftabschnittes sein. Trotzdem wird eine spielfreie feste Verbindung zwischen dem Schraubenkopf und dem Werkstück erzielt, denn bei der erfindungsgemäßen Wahl der Länge des gewindefreien Schaftabschnittes ist eine ausreichende Spielausgleichsmöglichkeit in einem weiten Spielbereich vorhanden. Die vorgenannte spielfreie feste Verbindung gewährleistet die angestrebte Sicherung gegen zurückdrehendes Lösen der Schraube. Bei dem Herstellen der Schraubenverbindung wird die Schraube einfach so weit angezogen, bis sich das Werkstück in dem gewindefreien Schaftabschnitt befindet, so dass sich die Schraube durchdrehen kann. Ab diesem Augenblick wird keine weitere Verformungskraft auf die Scheibe ausgeübt. Diese behält vielmehr ihre bis dahin erreichte plastische Verformung bei, welche genau das zwischen Werkstück und Schraubenkopf vorhandene Spiel ausgleicht. Diese Ausgleichsmöglichkeit ist in einem Bereich gegeben, der nach unten hin bis zu einem Spiel reicht, das gleich der Ausgangsdicke der Scheibe ist, also der Dicke der Scheibe im noch nicht abgewinkelten Zustand. Die Scheibe wird in diesem Fall so lange plastisch verformt, bis das Werkstück im gewindefreien Schaftabschnitt ist und die Scheibe wieder flachgedrückt ist. In den vorstehend geschilderten Einsatzfällen der Scheibe bei der Schraubenverbindung nach der Erfindung muss selbstverständlich die Schraube in den zu verbindenden dünnen Platten einen ausreichenden Ausreißwiderstand haben, d. h. die Auszugskraft aus dem Werkstück muss größer sein als die Kraft, die zum plastischen Verformen der Scheibe aufgebracht werden muss. Wenn es sich bei den dünnen Platten um Stahlbleche od.dgl. handelt, ist ein ausreichender Ausreißwiderstand üblicherweise ohne weiteres gegeben.

Bei der Schraubenverbindung nach der Erfindung besteht die Scheibe aus einem Material, das so gewählt ist, dass die Scheibe bei dem Herstellen der Schraubenverbindung plastisch verformbar ist und die Auszugskraft der Schraube aus dem Werkstück, welches mindestens eine dünne Platte aufweist, grösser ist als die Kraft, die zur plastischen Verformung der Scheibe aufgebracht werden muss.

Bei der erfindungsgemäßen Schraubenverbindung kann die Scheibe so eingesetzt werden, dass nach dem Setzen einer einen gewindefreien Schaftabschnitt aufweisenden Schraube zwischen dem Kopf und einem auf einem Untergrund od.dgl. zu befestigenden Werkstück kein Spiel mehr vorhanden ist, wenn die Schraube mit ihrem Ende an einem Anschlag ist oder durch einen Tiefenanschlag eines Schraubensetzgerätes dessen Antrieb abgeschaltet wird. Die Scheibe wird bei dem Setzen plastisch verformt und beseitigt so jegliches Spiel zwischen dem Werkstück und dem Schraubenkopf, und zwar auch bei ursprünglich großem Spiel. Die abgewinkelte Form der Scheibe ermöglicht nämlich einen Spielausgleich in einem sehr großen Bereich.

Wenn in einer Ausgestaltung der Schraubenverbindung nach der Erfindung die Bohrung der abgewinkelten Scheibe konisch ist, kann die Scheibe in Verbindung mit Schrauben eingesetzt werden, bei denen der Schaft der Schraube einen konischen Anschluss an den Kopf der Schraube aufweist.

Wenn in einer weiteren Ausgestaltung der Schraubenverbindung nach der Erfindung die Scheibe quer zu der diametralen Achse um eine Strecke abgewinkelt ist, die wenigstens gleich der Ausgangsdicke der Scheibe ist, ist die Scheibe besonders in Fällen einsetzbar, in welchen geringes Spiel auszugleichen ist.

Wenn in einer weiteren Ausgestaltung der Schraubenverbindung nach der Erfindung der Winkel, um den die Scheibe abgewinkelt ist, kleiner als 180° und größer als oder gleich 90° ist, bietet die Scheibe in der Schraubenverbindung nach der Erfindung eine Ausgleichsmöglichkeit für Spiel, das in einem beträchtlichen Bereich variieren kann.

Wenn in einer weiteren Ausgestaltung der Schraubenverbindung nach der Erfindung die Scheibe kreisringförmig ist, kann die Scheibe auf einfache Weise aus einer Beilagscheibe od.dgl. hergestellt werden, wobei lediglich darauf zu achten ist, dass diese aus einem entsprechend plastisch verformbaren Material besteht.

Wenn in einer weiteren Ausgestaltung der Schraubenverbindung nach der Erfindung die Scheibe die Form eines Vielecks hat, lässt sich die Scheibe auf ebenso einfache Weise herstellen, ohne dass von einem ebenen, kreisrunden Scheibenrohling ausgegangen wird.

Wenn in einer weiteren Ausgestaltung der Schraubenverbindung nach der Erfindung das Material der Scheibe Kohlenstoffstahl ist, d. h. unlegierter Stahl, besteht die Scheibe aus einem ohne weiteres verfügbaren Werkstoff, dessen plastische Verformbarkeit sich für den Spielausgleich bestens eignet.

Wenn in einer weiteren Ausgestaltung der Schraubenverbindung nach der Erfindung das Gewinde der Schraube selbstschneidend oder selbstformend ist, lässt sich die Schraubenverbindung auf einfache Weise herstellen, ohne dass zuvor in dem Werkstück eine Gewindebohrung hergestellt wird.

Wenn in einer weiteren Ausgestaltung der Schraubenverbindung nach der Erfindung der Durchmesser des gewindefreien Schaftabschnittes höchstens gleich dem Kerndurchmesser des Gewindes ist, lässt sich die Schraubenverbindung auf einfache Weise herstellen, ohne dass ein Teil der zum plastischen Verformen der Scheibe verfügbaren Kraft vergeudet wird, um den gewindefreien Schaftabschnitt durch eine zu enge Bohrung hindurchzuziehen.

Wenn in einer weiteren Ausgestaltung der Schraubenverbindung nach der Erfindung der Schaft der Schraube einen konischen Anschluss an den Kopf der Schraube aufweist, kann dieser Anschluss von der Bohrung der Scheibe aufgenommen werden, die zumindest durch das Abwinkeln der Scheibe ebenfalls konisch ausgebildet sein wird.

Wenn in einer weiteren Ausgestaltung der Schraubenverbindung nach der Erfindung die Bohrung der Scheibe zumindest in nicht montiertem Zustand der Scheibe dem konischen Anschluss des Schaftes angepasst ist, hat die Scheibe auch bei fertiger Schraubenverbindung im Wesentlichen kein axiales Spiel bezüglich des gewindefreien Schaftabschnittes der Schraube.

Ausführungsbeispiele der Erfindung werden im Folgenden unter Bezugnahme auf die Zeichnungen näher beschrieben. Es zeigt:
- Fig. 1: einen Scheibenrohling für eine Scheibe, die bei der Schraubenverbindung nach der Erfindung einsetzbar ist,
- Fig. 2: die Schraubenverbindung nach der Erfindung in einem Zustand, in welchem die Scheibe durch das Anziehen der Schraube noch nicht verformt worden ist,
- Fig. 3: die Schraubenverbindung nach der Erfindung in einem Zustand, in welchem die Scheibe plastisch verformt ist, und
- Fig. 4: eine Seitenansicht der Schraubenverbindung nach Fig. 3.

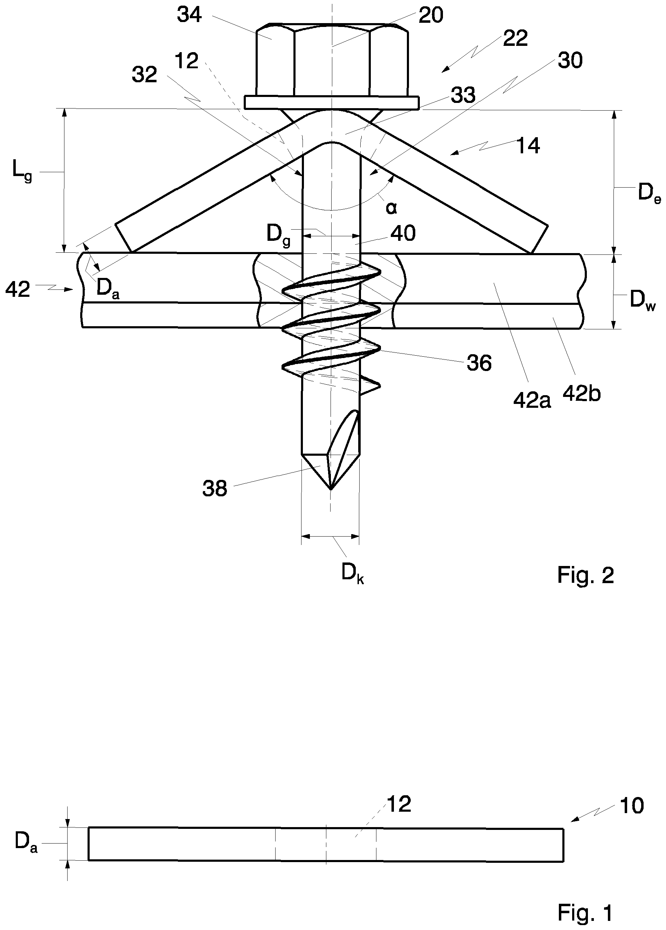

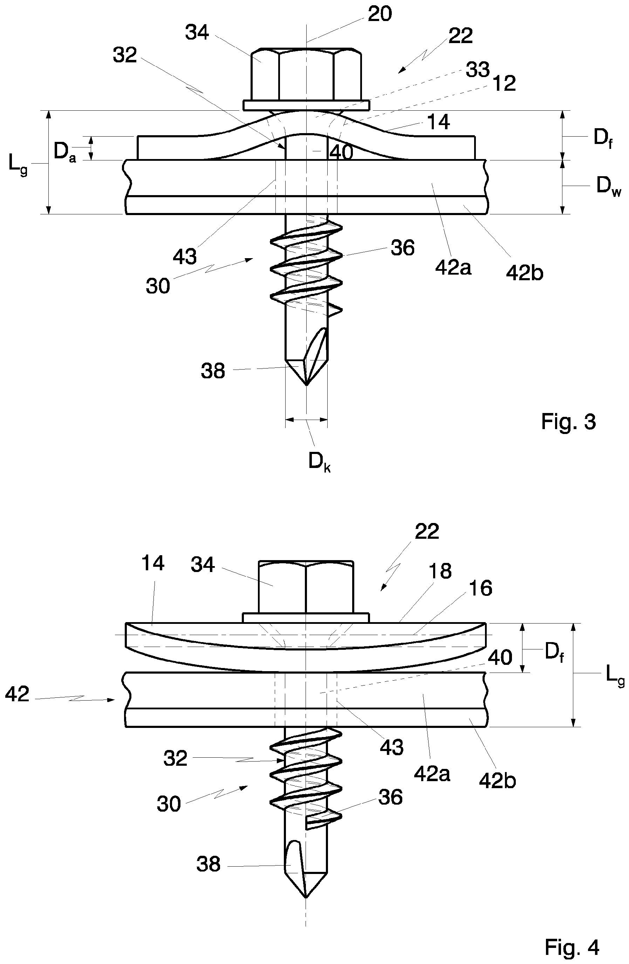

Fig. 1 zeigt ein Ausführungsbeispiel eines mit 10 bezeichneten Scheibenrohlings. Der Scheibenrohling 10 ist eine ebene Kreisscheibe, die mit einer konischen Bohrung 12 versehen ist. Aus dem Scheibenrohling 10 wird durch räumliches Verformen eine abgewinkelte Scheibe 14 hergestellt, wie sie in Fig. 2 dargestellt ist. Das Abwinkeln des Scheibenrohlings 10 erfolgt um wenigstens eine sich diametral durch die Bohrung 12 erstreckende Achse 16, die in Fig. 4 strichpunktiert angedeutet ist. Der Scheibenrohling 10 könnte zusätzlich z. B. um eine weitere diametrale Achse abgewinkelt werden (nicht dargestellt), die sich rechtwinkelig zu der Achse 16 diametral durch die Bohrung 12 erstreckt. Die Abwinkelung um die diametrale Achse 16 würde in diesem Fall so erfolgen, dass eine Winkelscheitellinie 18, wie sie in Fig. 4 zu erkennen ist, parallel zu der Achse 16 ist, und weiter quer zu der diametralen Achse 16, und zwar in beiden Fällen jeweils um eine Strecke, die wenigstens gleich einer Ausgangsdicke Dₐ der Scheibe 14 ist, d. h. gleich der Dicke Dₐ des Scheibenrohlings 10. Grundsätzlich ist der Winkel, um den die Scheibe 14 abgewinkelt ist und welcher für die Zwecke der vorliegenden Beschreibung gleich dem Winkel α ist, den die beiden Winkelschenkel der Scheibe 14 einschließen, kleiner als 180° und größer als oder gleich 90°. Die Scheibe 14 ist kreisringförmig, aber um die diametrale Achse 16 um den Winkel α abgewinkelt. Die gleiche Scheibe 14 ist als Scheibenrohling 10 ebenfalls kreisförmig, aber eben. Statt der Kreisringform kann die Scheibe auch die Form eines mit der mittigen Bohrung 12 versehenen Vielecks haben, also z. B. eine quadratische Form. Durch das Abwinkeln um die diametrale Achse 16 erhält die Scheibe gegenüber der Ausgangsdicke Dₐ eine in Fig. 2 angedeutete Einsatzdicke Dₑ, die wesentlich größer als die Ausgangsdicke Dₐ ist. Die Scheibe 14 besteht aus einem Material, das so gewählt ist, dass die Scheibe bei dem Herstellen der Schraubenverbindung, was mit Bezug auf die Fig. 3 und 4 näher beschrieben wird, plastisch verformbar ist. Zweckmäßig kann die Scheibe 14 beispielsweise aus einem weichen oder unlegierten Kohlenstoffstahl bestehen, so dass sie aus dem in Fig. 2 gezeigten Zustand heraus bei Beaufschlagung mit Druck in Richtung einer Achse 20 nicht elastisch, sondern plastisch verformt wird. Durch das Abwinkeln gegenüber dem in Fig. 1 gezeigten Ausgangszustand erhält die Scheibe 14 die Form eines Satteldaches.

Im Folgenden wird als ein Einsatzbeispiel der Scheibe 14 deren Verwendung in einer in den Fig 2 - 4 insgesamt mit 22 bezeichneten Schraubenverbindung beschrieben.

Eine Schraube 30, deren Mittelachse die Achse 20 ist, ist mit einem Schaft 32 und einem Kopf 34 versehen. Der Schaft 32 ist mit einem Gewinde 36 versehen. An seinem freien, von dem Kopf 34 abgewandten Ende hat der Schaft 32 eine lochbohrende Spitze 38, die einfach auch nur eine lochformende Spitze sein könnte. Der Schaft 32 hat an seinem zu der Spitze entgegengesetzten Ende zwischen dem Kopf 34 und dem Gewinde 36 einen gewindefreien Schaftabschnitt 40. Ein insgesamt mit 42 bezeichnetes Werkstück besteht im gezeigten Ausführungsbeispiel aus zwei dünnen Platten, nämlich einer Platte 42a und einer Platte 42b, wobei letztere dünner ist als die Platte 42a. Zweckmäßig wird die Übereinanderanordnung der beiden dünnen Platten 42a, 42b so gewählt, dass sich die dickere Platte 42a auf der dem Kopf 34 der Schraube 30 zugewandten Seite befindet, wie es in den Fig. 2 bis 4 dargestellt ist.

Der gewindefreie Schaftabschnitt 40 verfügt in Achsrichtung der Schraube 30 über eine Länge L_{g}, die in dem dargestellten Ausführungsbeispiel gleich der Einsatzdicke Dₑ der Scheibe 14 ist. Erfindungsgemäß ist die Länge L_{g} des gewindefreien Schaftabschnittes 40 kleiner als die Summe der Dicke D_{w} des Werkstückes 42 und der Einsatzdicke Dₑ der Scheibe 14. Auf jeden Fall sollte die Länge L_{g} des gewindefreien Schaftabschnittes 40 nicht kleiner sein als die Summe der Dicke D_{w} des Werkstückes 42 und der Ausgangsdicke Dₐ der Scheibe 14 bzw. des Scheibenrohlings 10. Diese Ausgestaltung soll bei entsprechend dünnen miteinander zu verbindenden Platten 42a, 42b ein Überdrehen der Schraube 30 ermöglichen, ohne dass das Drehmoment zu stark anwächst. Sobald die Schraube 30 überdreht wird, werden die dünnen Platten 42a, 42b fest zusammengehalten, und es ist praktisch nicht mehr möglich, dass sich die Schraubenverbindung durch Zurückdrehen der Schraube 30 löst. Dieser Zustand ist in den Fig. 3 und 4 gezeigt, auf den weiter unten noch näher eingegangen wird. Wenn die Länge L_{g} des gewindefreien Schaftabschnittes 40 geringfügig kleiner ist als die Summe der Dicke D_{w} der beiden dünnen Platten 42a, 42b und der Ausgangsdicke Dₐ der Scheibe 14, ist auch die Möglichkeit gegeben, dass sich die Schraube 30 nach dem endgültigen Setzen überdrehen kann. Sie greift dabei aber noch geringfügig in die Unterseite der dünnen Platte 42b ein.

Das Gewinde 36 der Schraube 30 ist selbstschneidend oder selbstformend. Der Durchmesser D_{g} (Fig. 2) des gewindefreien Schaftabschnittes 40 ist in dem hier beschriebenen Ausführungsbeispiel gleich dem Kerndurchmesser Dₖ des Gewindes 36. Der Schaft 32 der Schraube 30 weist einen konischen Anschluss 33 an den Kopf 34 der Schraube 30 auf. Die Bohrung 12 der Scheibe 14 ist zumindest im nicht montierten Zustand dem konischen Anschluss 33 des Schaftes 32 angepasst, wie es in den Fig. 2 - 4 angedeutet ist, in denen der konische Anschluss 33 mit Spiel in der konischen Bohrung 12 aufgenommen ist.

Das Setzen der Schraube 30 wird im Folgenden unter Bezugnahme auf die Fig. 2 - 4 näher beschrieben. In dem in Fig. 2 dargestellten Zustand der Schraubenverbindung 22 überbrückt die abgewinkelte Scheibe 14 den Abstand zwischen der Oberseite des Werkstückes 42 und der Unterseite des Schraubenkopfes 34, ist aber noch nicht verformt. Die Einsatzdicke Dₑ der abgewinkelten Scheibe 14 ist somit gleich der Länge L_{g} des gewindefreien Schaftabschnittes 40. Die Schraube 30 hat zuvor mit ihrer Spitze 38 in dem Werkstück 42 ein Loch mit dem Kerndurchmesser Dₖ gebohrt und anschließend mit ihrem Gewinde 36 in dem Werkstück 42 ein Gewinde 43 geschnitten, in das die Schraube 30 so weit eingedreht worden ist, bis ihrer oberster Gewindegang auf der Höhe der Oberseite der dünnen Platte 42a liegt und mit dieser bündig ist, wie es in Fig. 2 gezeigt ist.

Wenn die Schraube 30 nun weiter eingedreht wird, wird die Scheibe 14 mit zunehmendem Vorschub der Schraube 30 in einen flacher werdenden Zustand plastisch verformt und erreicht schließlich den in Fig. 3 gezeigten Zustand, in welchem der oberste Gewindegang des Gewindes 36 unten aus der Gewindebohrung in dem Werkstück 42 austritt und sich auf der Höhe der Unterseite der dünnen Platte 42b befindet. Ab diesem Augenblick kann sich die Schraube 30 überdrehen, ohne dass ein weiterer Vorschub in Richtung der Achse 20 erfolgt. Gleichzeitig hört die plastische Verformung der Scheibe 14 auf, die nun den in den Fig. 3 und 4 gezeigten Zustand beibehält. Fig. 3 zeigt die Scheibe 14 in Vorderansicht, und Fig. 4 zeigt die Scheibe 14 in Seitenansicht. Die Scheibe 14, die in Fig. 2 noch die Einsatzdicke Dₑ hatte, hat nun nur noch eine wesentlich kleinere Dicke D_{f}, mit der sie ein Spiel gleicher Größe ausgleicht. Die Abwinkelung der Scheibe 14 in dem Anfangszustand gemäß Fig. 2 und das Material der Scheibe 14 werden bei gegebener Ausgangsdicke Dₐ der Scheibe 14 in Bezug auf die Ausreiß- oder Auszugskraft der Schraube 30 aus dem Werkstück 42 so gewählt, dass die durch den Vorschub der Schraube 30 auf die Scheibe 14 ausgeübte Kraft zum plastischen Verformen derselben stets kleiner ist als die Auszugskraft. Die Vorspannkraft, die in dem Zustand nach den Fig. 3 und 4 auf die Scheibe 14 ausgeübt wird, ist Null, sobald das Gewinde 36 den Gewindeeingriff mit dem Werkstück 42 verlassen hat.

Im Stand der Technik, wie er eingangs am Beispiel der Dokumente DE 197 18 712 C1 und US 2,321,379 geschildert ist, wird angestrebt, die Gesamtdicke der dünnen Platten so zu wählen, dass sie möglichst gleich der oder allenfalls nur geringfügig größer ist als die Länge des gewindefreien Schaftabschnittes, damit, sobald sich die Schraube in den Platten überdreht, die Platten fest an die Unterseite des Schraubenkopfes angedrückt gehalten werden. Sollte aber die Dicke der dünnen Platten variieren und dadurch axiales Spiel zwischen der Schraubenkopfunterseite und der benachbarten dünnen Platte entstehen, besteht im Stand der Technik keine Möglichkeit, dieses Spiel auszugleichen. Bei der hier beschriebenen Schraubenverbindung 22 wird von vornherein die Länge L_{g} des gewindefreien Schaftabschnittes 40 gleich der Einsatzdicke Dₑ der abgewinkelten Scheibe 14 gemacht, wobei die Einsatzdicke Dₑ, notwendigerweise größer als die Ausgangsdicke Dₐ der Scheibe 14 ist. Aus einem Vergleich der Fig. 2 und 3 ist zu erkennen, dass die Scheibe 14 bei entsprechender Dicke D_{w} des Werkstückes 42 auf die Dicke Dₐ der Scheibe 14 zusammengedrückt werden könnte, wobei dann Dₐ gleich D_{f} wäre. Zweckmäßig sollte aber D_{f} größer als Dₐ sein, damit bei dem Ausgleich der zwischen der Unterseite des Schraubenkopfes 34 und der Oberseite des . Werkstückes 42 verbleibenden Strecke in dem Zustand in Fig. 3 bei variierendem Spiel mehr Sicherheit gewährleistet ist. In dem in den Fig. 3 und 4 gezeigten Setzzustand der Schraube 30 ist die abgewinkelte Scheibe 14 gegenüber dem Zustand in Fig. 2 um die Dicke D_{w} des Werkstückes 42 flach gedrückt worden. Die Dicke des Werkstückes 42 legt somit die größtmögliche Verformung der Scheibe 14 fest. Die Verformung kann so weit gehen, dass am Ende die Scheibe 14 eine Dicke D_{f} hat, die gleich der Ausgangsdicke Dₐ ist, wie oben dargelegt. Mehr Spielraum bietet aber eine Ausgestaltung, in welcher D_{f} größer als Dₐ ist.

In dem dargestellten Ausführungsbeispiel ist die Scheibe 14 eine um die Achse 16 abgewinkelte kreisringförmige Scheibe. Sie hat in dem in Fig. 2 gezeigten Zustand mit der Oberseite des Werkstückes 42 an zwei diametral gegenüberliegenden Stellen praktisch nur Punktberührung. Wenn die Scheibe 14 in Richtung auf den in den Fig. 3 und 4 gezeigten Zustand durch plastische Verformung zunehmend flach gedrückt wird, geht die ursprüngliche Punktberührung an beiden Schenkeln der Scheibe 14 in eine zunehmend flächige Berührung über, wie sie in den Figuren 3 und 4 zu erkennen ist. In diesem Zustand liegt die Scheibe 14 beiderseits der Schraube 30 satt auf der Oberseite des Werkstückes 42 auf.

## Patentansprüche

1. Schraubenverbindung zwischen einer Schraube (30) und einem Werkstück (42),
wobei die Schraube (30) einen Schaft (32) aufweist, der mit einem Gewinde (36) versehen ist und an seinem dem Kopf (34) benachbarten Ende einen gewindefreien Schaftabschnitt (40) hat,
wobei zwischen dem Kopf (34) der Schraube (30) und dem Werkstück (42) eine Scheibe (14) angeordnet ist,
wobei die Scheibe (14) eine die Schraube (30) aufnehmende Bohrung (12) aufweist und um wenigstens eine sich diametral durch die Bohrung (12) erstreckende Achse (16) räumlich so verformt ist,
dass die Scheibe (14) um die diametrale Achse (16) abgewinkelt ist, so dass eine Winkelscheitellinie (18) parallel zu der Achse (16) ist und die abgewinkelte Scheibe (14) eine Einsatzdicke (Dₑ) hat, die größer ist als die Ausgangsdicke (Dₐ) der Scheibe (14), und
wobei die Scheibe (14) aus einem Material besteht, das so gewählt ist, dass die Scheibe (14) bei dem Herstellen der Schraubenverbindung (22) plastisch verformbar ist,
**dadurch gekennzeichnet, dass** das Werkstück (42) aus wenigstens einer und vorzugsweise aus mehreren dünnen Platten (42a, 42b) besteht,
dass der Schaft (32) an seinem freien, von dem Kopf (34) abgewandten Ende eine lochformende oder -bohrende Spitze (38) hat und
dass die Länge (L_{g}) des gewindefreien Schaftabschnittes (40) kleiner ist als die Summe der Dicke (D_{w}) des Werkstückes (42) und der Einsatzdicke (Dₑ) der Scheibe (14) und im Wesentlichen nicht kleiner ist als die Summe der Dicke (D_{w}) des Werkstückes (42) und der Ausgangsdicke (Dₐ) der Scheibe (14).

2. Schraubenverbindung nach Anspruch 1, **dadurch gekennzeichnet, dass** die Bohrung (12) der abgewinkelten Scheibe (14) konisch ist.

3. Schraubenverbindung nach Anspruch 1 oder 2, **dadurch gekennzeichnet, dass** die Scheibe (14) quer zu der diametralen Achse (16) um eine Strecke abgewinkelt ist, die wenigstens gleich der Ausgangsdicke (Dₐ) der Scheibe (14) ist.

4. Schraubenverbindung nach einem der Ansprüche 1 bis 3, **dadurch gekennzeichnet, dass** der Winkel (α), um den die Scheibe (14) abgewinkelt ist, kleiner als 180° und größer als oder gleich 90° ist.

5. Schraubenverbindung nach einem der Ansprüche 1 bis 4, **dadurch gekennzeichnet, dass** die Scheibe (14) kreisringförmig ist.

6. Schraubenverbindung nach einem der Ansprüche 1 bis 4, **dadurch gekennzeichnet, dass** die Scheibe (14) die Form eines Vielecks hat.

7. Schraubenverbindung nach einem der Ansprüche 1 bis 6, **dadurch gekennzeichnet, dass** das Material der Scheibe (14) Kohlenstoffstahl ist.

8. Schraubenverbindung nach einem der Ansprüche 1 bis 7, **dadurch gekennzeichnet, dass** das Gewinde (36) der Schraube (30) selbstschneidend oder selbstformend ist.

9. Schraubenverbindung nach einem der Ansprüche 1 bis 8, **dadurch gekennzeichnet, dass** der Durchmesser (D_{g}) des gewindefreien Schaftabschnittes (40) höchstens gleich dem Kerndurchmesser (Dₖ) des Gewindes (36) ist.

10. Schraubenverbindung nach einem der Ansprüche 1 bis 9; **dadurch gekennzeichnet, dass** der Schaft (32) der Schraube (30) einen konischen Anschluss (33) an den Kopf (34) der Schraube (30) aufweist.

11. Schraubenverbindung nach Anspruch 10, **dadurch gekennzeichnet, dass** die Bohrung (12) der Scheibe (14) zumindest in nichtmontiertem Zustand der Scheibe (14) dem konischen Anschluss (33) des Schaftes (32) angepasst ist.

## Claims

1. A threaded assembly between a screw (30) and a workpiece (42), wherein the screw (30) has a shaft (32) that is provided with a thread (36) and has an unthreaded shaft section (40) at its end adjacent to the head (34),
wherein a washer (14) is arranged between the head (34) of the screw (30) and the workpiece (42),
wherein the washer (14) has a bore (12) receiving the screw (30) and is spatially deformed around at least one axis (16) extending diametrically through the bore (12) in such a manner
that the washer (14) is angled around the diametrical axis (16) so that an angular crown line (18) is parallel to the axis (16), and the angled washer (14) has an operational thickness (Dₑ) that is greater than the initial thickness (Dₐ) of the washer (14), and
wherein the washer (14) is made from a material that is selected such that the washer (14) can be plastically deformed when the threaded assembly (22) is created,
**characterized in that** the workpiece (42) is composed of at least one and preferably of a plurality of thin plates (42a, 42b),
that the shaft (32) has a hole-forming or hole-drilling tip (38) at its free end facing away from the head (34) and
that the length (Lg) of the unthreaded shaft section (40) is smaller than the sum of the thickness (D_{w}) of the workpiece (42) and the operational thickness (Dₑ) of the washer (14) and is substantially not smaller than the sum of the thickness (D_{w}) of the workpiece (42) and the initial thickness (Dₐ) of the washer (14).

2. The threaded assembly according to claim 1, **characterized in that** the bore (12) of the angled washer (14) is conical.

3. The threaded assembly according to claim 1 or 2, **characterized in that** the washer (14) is angled transversely with respect to the diametrical axis (16) by a distance that is at least equivalent to the initial thickness (Dₐ) of the washer (14).

4. The threaded assembly according to any one of claims 1 to 3, **characterized in that** the angle (α) at which the washer (14) is angled, is less than 180° and greater or equal to 90°.

5. The threaded assembly according to any one of claims 1 to 4, **characterized in that** the washer (14) is of a circular shape.

6. The threaded assembly according to any one of claims 1 to 4, **characterized in that** the washer (14) has the shape of a polygon.

7. The threaded assembly according to any one of claims 1 to 6, **characterized in that** the material of the washer (14) is carbon steel.

8. The threaded assembly according to any one of claims 1 to 7, **characterized in that** the thread (36) of the screw (30) is self-cutting or self-tapping.

9. The threaded assembly according to any one of claims 1 to 8, **characterized in that** the diameter (D_{g}) of the unthreaded shaft section (40) is at most equal to the core diameter (Dₖ) of the thread (36).

10. The threaded assembly according to any one of claims 1 to 9, **characterized in that** the shaft (32) of the screw (30) has a conical connection (33) to the head (34) of the screw (30).

11. The threaded assembly according to claim 10, **characterized in that** the bore (12) of the washer (14), at least in the unassembled state of the washer (14), is adapted to the conical connection (33) of the shaft (32).

## Revendications

1. Assemblage à vis entre une vis (30) et une pièce (42), la vis (30) comportant une tige (32) qui est dotée d'un filetage (36) et possède à son extrémité voisine de la tête (34) une section de tige (40) dépourvue de filetage,
une rondelle (14) étant disposée entre la tête (34) de la vis (30) et la pièce (42),
la rondelle (14) comportant un alésage (12) recevant la vis (30) et au moins un axe (16) s'étendant diamétralement à travers l'alésage (12) étant déformée dans l'espace de telle manière
que la rondelle (14) est coudée autour de l'axe diamétral (16) de telle sorte qu'une ligne de sommet d'angle (18) est parallèle à l'axe (16) et la rondelle coudée (14) possède une épaisseur d'insertion (Dₑ) qui est plus grande que l'épaisseur initiale (Dₐ) de la rondelle (14), et
la rondelle (14) est composée d'un matériau qui est choisi de telle manière que la rondelle (14) peut être plastiquement déformée lors de la réalisation de l'assemblage à vis (22),
**caractérisé en ce que** la pièce (42) est au moins composée d'une et de préférence de plusieurs plaques minces (42a, 42b),
**en ce que** la tige (32) possède sur son extrémité libre distante de la tête (34) une pointe (38) formant ou perçant un trou et
**en ce que** la longueur (Lg) de la section de tige (40) dépourvue de filetage est plus petite que la somme de l'épaisseur (D_{w}) de la pièce (42) et de l'épaisseur d'insertion (Dₑ) de la rondelle (14) et pour l'essentiel pas plus petite que la somme de l'épaisseur (D_{w}) de la pièce (42) et de l'épaisseur initiale (Dₐ) de la rondelle (14).

2. Assemblage à vis selon la revendication 1, **caractérisé en ce que** l'alésage (12) de la rondelle coudée (14) est conique.

3. Assemblage à vis selon la revendication 1 ou 2, **caractérisé en ce que** la rondelle (14) est coudée transversalement à l'axe diamétral (16) sur une distance qui est au moins égale à l'épaisseur de sortie (Dₐ) de la rondelle (14).

4. Assemblage à vis selon l'une quelconque des revendications 1 à 3, **caractérisé en ce que** l'angle (α) est coudé autour de la rondelle (14), et est inférieur à 180° et supérieur ou égal à 90°.

5. Assemblage à vis selon l'une quelconque des revendications 1 à 4, **caractérisé en ce que** la rondelle (14) est en forme d'anneau circulaire.

6. Assemblage à vis selon l'une quelconque des revendications 1 à 4, **caractérisé en ce que** la rondelle (14) a la forme d'un polygone.

7. Assemblage à vis selon l'une quelconque des revendications 1 à 6, **caractérisé en ce que** le matériau de la rondelle (14) est de l'acier au carbone.

8. Assemblage à vis selon l'une quelconque des revendications 1 à 7, **caractérisé en ce que** le filetage (36) de la vis (30) est autotaraudant et autoformant.

9. Assemblage à vis selon l'une quelconque des revendications 1 à 8, **caractérisé en ce que** le diamètre (D_{g}) de la section de tige dépourvue filetage (40) est au maximum égal au diamètre central (Dₖ) du filetage (36).

10. Assemblage à vis selon l'une quelconque des revendications 1 à 9, **caractérisé en ce que** la tige (32) de la vis (30) comporte un raccord conique (33) à la tête (34) de la vis (30).

11. Assemblage à vis selon la revendication 10, **caractérisé en ce que** l'alésage (12) de la rondelle (14) est adapté, au moins à l'état non monté de la rondelle (14), au raccord conique (33) de la tige (32).
